# EUROPÄISCHE PATENTSCHRIFT

(11) **EP 0 820 854 B1**
(45) Veröffentlichungstag und Bekanntmachung des Hinweises auf die Patenterteilung: **23.05.2001**
(21) Anmeldenummer: 96111834.6
(22) Anmeldetag: 23.07.1996
(51) Int. Cl.: B29C 65/02, B65D 83/14, B31B 1/84

(54) **Verfahren zum gasdichten Verbinden des Innenbeutels einer Aerosoldose mit dem Ventilhalter**
Process for hermetically joining the innerbag of an aerosol container with a valve holder
Procédé pour raccorder de façon hermétique aux gaz le sac intérieur d'un récipient aérosol avec un support de valve

(43) Veröffentlichungstag der Anmeldung: 28.01.1998
(73) Patentinhaber: RAPID SPRAY GmbH & Co. KG, FABRIK CHEM. ERZEUGNISSE, D-88471 Laupheim (DE)
(72) Erfinder: Lense, Hans-Georg, 88471 Laupheim (DE)
(74) Vertreter: Stahl, Gerhard F.W.

(56) Entgegenhaltungen:
- EP-A- 0 491 380
- EP-A- 0 606 526
- WO-A-92/14600
- FR-A- 2 523 848
- GB-A- 623 736
- US-A- 3 322 590
- US-A- 3 558 397
- US-A- 4 023 607
- PATENT ABSTRACTS OF JAPAN vol. 94, no. 011 & JP 06 320644 A (MATERIAL ENG TECH LAB INC), 22.November 1994,

## Beschreibung

Die Erfindung betrifft ein Verfahren zum gasdichten Verbinden des aus einer Kunststoffolie oder einem Folienlaminat bestehenden Innenbeutels einer Aerosoldose mit einem zylindrischen äußeren Rohr eines aus Kunststoff bestehenden Ventilhalters unter Verwendung von zwei spiegelbildlich ausgebildeten, beheizbaren Siegelbacken, die jeweils eine erhabene Fläche aufweisen, die durch eine näherungsweise halbzylindrische Ausnehmung unterbrochen ist, die zur Aufnahme des äußeren Rohres des Ventilhalters dient, wobei die beiden Siegelbacken im geschlossenen Zustand das äußere Rohr des Ventilhalters und die daran anliegenden beiden Lagen des Innenbeutels zwischen sich einklemmen.

Bei einem bekannten Verfahren dieser Gattung wird ein Werkzeug verwendet, bei dem die in den beiden Siegelbacken ausgebildete Ausnehmung genau halbzylindrisch ist und rechtwinklig in die erhabene Fläche übergeht. Im geschlossenen Zustand schmiegen sich die beiden Siegelbacken eng an den Außenumfang des äußeren Rohres des Ventilhalters an. In der Praxis haben sich beim Verschweißen des Innenbeutels mit dem Ventilhalter jedoch Schwierigkeiten ergeben. Es besteht nämlich die Gefahr, daß die Verschweißung in demjenigen Bereich, wo die beiden Siegelbacken aneinanderstoßen, ungenügend ist, so daß Kapillaren auftreten. Durch diese Kapillaren kann aber der Inhalt des Innenbeutels unter dem Druck des in der Aerosoldose befindlichen Treibgases entweichen und sich mit dem Treibgas vermengen.

Zur Lösung dieses Problems ist es bei einem ebenfalls gattungsgemäßen Verfahren aus der EP 0 606 526 A2 bereits bekannt, das äußere Rohr des Ventilhalters im unteren Bereich an seiner Außenseite mit zwei axial verlaufenden flügelartigen Vorsprüngen zu versehen, die einen sich radial nach außen verjüngenden Querschnitt haben. Demzufolge weisen die beiden zum Verbinden des Innenbeutels mit dem Ventilhalter verwendeten Siegelbacken am Übergang in die Trennebene stumpfe Winkel auf, so daß sie sich besser an den Ventilhalter anschmiegen können als dies bei einem zylindrischen Umfang der Fall ist. Da die beiden flügelartigen Vorsprünge einen sich radial nach außen verjüngenden Querschnitt haben, werden sie im Bereich des Scheitels bis auf die Schmelztemperatur erhitzt, so daß auch im Bereich der Trennebene der beiden Siegelbacken eine gasdichte Verbindung des Innenbeutels mit dem Ventilhalter gewährleistet ist. Ein wesentlicher Nachteil dieser bekannten Lösung besteht aber darin, daß die Ausbildung der beiden flügelartigen Vorsprünge am äußeren Rohr des Ventilhalters ein Spezialwerkzeug erforderlich macht. Ein derartiges Spezialwerkzeug ist aber wesentlich teurer als die im Handel erhältlichen Werkzeuge zum Spritzformen eines herkömmlichen Ventilhalters, dessen äußeres Rohr zylindrisch ist.

Der Erfindung liegt daher die Aufgabe zugrunde, das gattungsgemäße Verfahren dahingehend zu verbessern, daß eine gasdichte Verschweißung eines zylindrischen äußeren Rohres des Ventilhalters mit dem Innenbeutel gewährleistet ist.

Die Lösung dieser Aufgabe ist im Patentanspruch 1 angegeben.

Beim Schließen der beiden erhitzten Siegelbacken wird das Material des Innenbeutels und des Ventilhalters auf Schmelztemperatur erhitzt. Da der Innendurchmesser des von den beiden Ausnehmungen der geschlossenen Siegelbacken gebildeten Hohlraums kleiner ist als der Außendurchmesser des äußeren Rohres des Ventilhalters kommt es zu einer Quetschwirkung, und das geschmolzene Material des äußeren Rohres wird seitwärts verdrängt und zwischen die beiden Lagen des Innenbeutels hineingedrückt. Da die Ausnehmungen am Übergang in die erhabene Fläche der jeweiligen Siegelbacke abgeschrägt sind, werden in der Trennebene zwei axiale Nuten mit dreieckigem Querschnitt gebildet, in die das durch die Quetschwirkung verdrängte Material des Ventilhalters eindringen kann. Am äußeren Rohr des Ventilhalters entstehen daher zwei axial verlaufende Vorsprünge, die einen sich radial nach außen verjüngenden Querschnitt haben. Diese durch die Quetschwirkung erzeugten keilförmigen Vorsprünge haben hinsichtlich der gasdichten Verschweißung die gleiche vorteilhafte Wirkung wie die flügelartigen Vorsprünge des bekannten Ventilhalters. Da diese keilförmigen Vorsprünge erst während der Verschweißung erzeugt werden und das äußere Rohr des Ventilhalters ursprünglich einen kreisrunden Querschnitt hat, kann es mit einem kostengünstigen Standardwerkzeug hergestellt werden.

Die von den Siegelbacken auf das äußere Rohr des Ventilhalters ausgeübte Quetschwirkung kann noch verbessert werden, wenn die Ausnehmungen mit Ringnuten versehen sind.

Um eine besonders innige Verschweißung des Innenbeutels mit dem Ventilhalter zu gewährleisten, ist es vorteilhaft, daß die Ringnuten einen halbkreisförmigen Querschnitt haben.

Im Hinblick auf die Quetschwirkung und die damit bezweckte Materialverdrängung des Ventilhalters ist es vorteilhaft, daß der von den Ausnehmungen der beiden Siegelbacken gebildete Hohlraum im oberen Bereich zylindrisch ist und nach unten hin elliptisch abgeflacht ist, wobei die längere Achse in der von den ebenen Flächen gebildeten Trennebene liegt.

Ein Ausführungsbeispiel der Erfindung ist in den Zeichnungen dargestellt und wird nachfolgend näher erläutert. Es zeigt:
Fig. 1 einen Längsschnitt durch den Ventilhalter nach der Linie A-A in Fig. 2,
Fig. 2 eine Endansicht des Ventilhalters gemäß Fig. 1 von links gesehen,
Fig. 3 eine Darstellung ähnlich wie Fig. 2, in der zwei Siegelbacken nach dem Öffnen schematisch dargestellt sind, und
Fig. 4 eine Seitenansicht einer Siegelbacke.

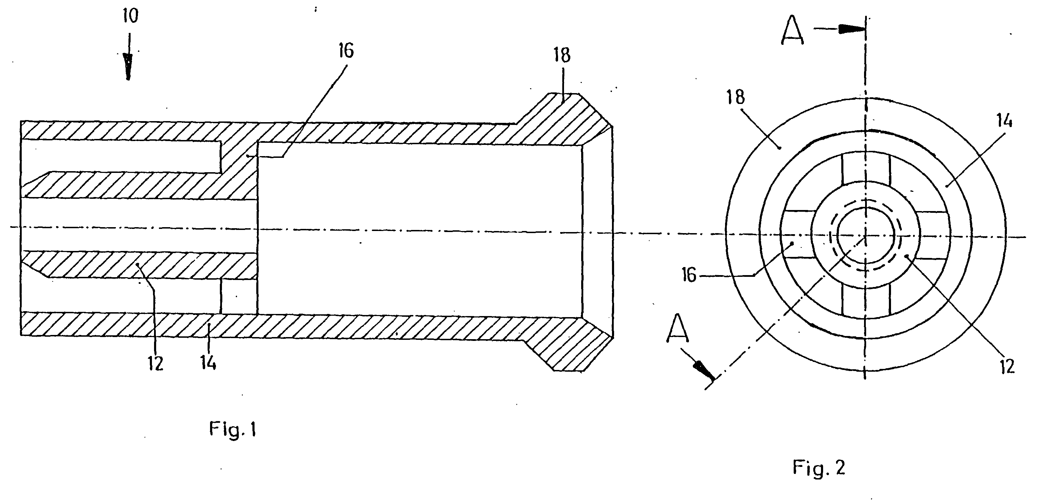

Der in Fig. 1 gezeigte und allgemein mit dem Bezugszeichen 10 bezeichnete Ventilhalter dient zum Einsatz in einer mit einem Innenbeutel versehenen Aerosoldose. Derartige Aerosoldosen werden für Produkte verwendet, die nicht mit dem Treibgas in Verbindung kommen dürfen, wie zum Beispiel ein selbstschäumendes Gel.

Der Ventilhalter 10 besteht aus einem einstückigen, gegossenen oder gespritzten Körper aus Kunststoff, insbesondere Polyethylen. Der Ventilhalter 10 umfaßt ein inneres zylindrisches Rohr 12 und ein zu diesem koaxial angeordnetes äußeres zylindrisches Rohr 14. Diese beiden Rohre 12 und 14 sind durch vier radiale Stege 16 miteinander verbunden. Wie aus Fig. 1 hervorgeht, sind die beiden Rohre 12 und 14 unterschiedlich lang, so daß das äußere Rohr 14 über das innere Rohr 12 vorsteht. Der vorstehende Bereich des äußeren Rohres 14 ist am freien Ende aus einem nachfolgend erläuterten Zweck mit einem nach außen vorspringenden Wulstrand 18 versehen.

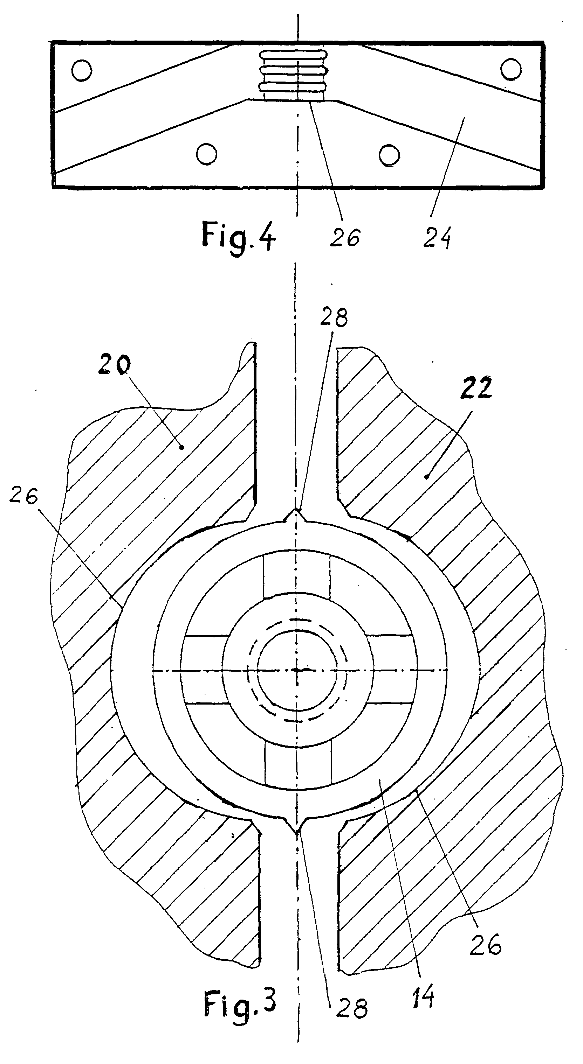

In das innere Rohr 12 kann ein Steigrohr eingesetzt werden, und in den über das innere Rohr 12 vorstehenden Bereich des äußeren Rohres 14 kann ein (nicht gezeigtes) Ventil eingesetzt werden, dessen Teller um den Wulstrand 18 des äußeren Rohres 14 umgebördelt wird. Ein (nicht gezeigter) Innenbeutel aus einer Kunststoffolie, vorzugsweise Polyethylen, oder aus einem Kunstoff-Aluminium-Kunstoff-Laminat wird mit dem äußeren Rohr 14 verschweißt. Hierzu dienen zwei in Fig. 3 schematisch dargestellte Siegelbacken 20, 22. Die beiden Siegelbacken 20, 22 sind mit einer geeigneten Heizeinrichtung versehen, um das Kunststoffmaterial des (nicht gezeigten) Innenbeutels und das äußere Rohr 14 des Ventilhalters 10 auf Schmelztemperatur zu erhitzen. Die beiden Siegelbacken 20, 22 sind spiegelsymmetrisch ausgebildet, weshalb es genügt, wenn eine von ihnen näher erläutert wird.

Fig. 4 zeigt eine der beiden Siegelbacken in der Seitenansicht. Im geschlossenen Zustand liegen die beiden Siegelbacken 20, 22 mit einer ebenen erhabenen Fläche 24 aneinander an und klemmen die beiden Lagen des Innenbeutels am oberen offenen Rand desselben zwischen sich ein. Die ebene Fläche 24 jeder Siegelbacke 20, 22 ist in der Mitte durch eine näherungsweise halbzylindrische Ausnehmung 26 unterbrochen. In diese Ausnehmung 26 sind mehrere Nuten mit halbrundem Querschnitt eingestochen, so daß die Ausnehmung ein wellenartiges Profil hat.

Wenn die beiden Siegelbacken 20, 22 mit ihren erhabenen Flächen 24 aneinander anliegen, dann bilden die beiden Ausnehmungen 26 einen Hohlraum zur Aufnahme des äußeren Rohres 14 des Ventilhalters 10. Wesentlich ist, daß der Innendurchmesser dieses Hohlraums kleiner ist als der Außendurchmesser des zylindrischen äußeren Rohres 14. Vorzugsweise ist der Hohlraum im oberen Bereich zylindrisch und im unteren Bereich elliptisch, wobei die große Achse der Ellipse in der Trennebene der beiden Siegelbacken 20, 22, das heißt in der ebenen Fläche 24 liegt. Ferner ist es wesentlich, daß die Ausnehmungen 26 am Übergang in die ebene Fläche 24 abgeschrägt sind, so daß die geschlossenen Siegelbacken 20, 22 in der Trennebene zwei keilförmige Nuten bilden, die einen sich radial nach außen verjüngenden Querschnitt haben.

Wenn die erhitzten Siegelbacken 20, 22 geschlossen werden, dann klemmen sie das zylindrische äußere Rohr 14 des Ventilhalters 10 und die an diesem anliegenden beiden Lagen des Innenbeutels zwischen sich ein. Da der Innendurchmesser des von den beiden Ausnehmungen 26 begrenzten Hohlraums kleiner ist als der Außendurchmesser des äußeren Rohres 14 kommt es zu einer plastischen Verformung desselben. Diese durch die Quetschwirkung der beiden Siegelbacken 20, 22 verursachte plastische Verformung des äußeren Rohres 14 hat zur Folge, daß das Kunststoffmaterial einerseits in die Ringnuten der Ausnehmungen 26 und andererseits zwischen den beiden Lagen des Innenbeutels in die keilförmigen Nuten eindringt. An dem ursprünglich zylindrischen äußeren Rohr 14 des Ventilhalters 10 entstehen daher zwei axial verlaufende Vorsprünge 28, die einen sich radial nach außen verjüngenden dreieckigen Querschnitt haben. Diese in der Trennebene 24 der beiden Siegelbacken 20, 22 liegenden Vorsprünge 28 ermöglichen aufgrund ihres dreieckigen Querschnitts eine gasdichte Verbindung des Innenbeutels mit dem Ventilhalter 10. Es wird nämlich ein sanfter Übergang der Folienlagen von der Trenneben 24 in die Umfangsfläche des äußeren Rohres 14 des Ventilhalters 10 erzielt.

Die in den Ausnehmungen 26 der Siegelbacken 20, 22 ausgebildeten Ringnuten dienen einerseits zur Verbesserung der Dichtwirkung durch eine Vergrößerung der Oberfläche, in der eine Verschweißung der Folienlagen des Innenbeutels mit dem äußeren Rohr 14 des Ventilhalters 10 erfolgt. Wesentlich ist aber auch, daß durch die von den Ringnuten begrenzten Rippen der Ausnehmungen 26 der Siegelbacken 20, 22 Material des äußeren Rohres 14 verdrängt und nicht nur in die Ringnuten, sondern auch in die axialen Nuten zwischen die beiden Folienlagen hineingedrückt wird. Aus den bereits genannten Gründen wird durch die dadurch gebildeten axialen Vorsprünge 28 mit näherungsweise dreieckigem Querschnitt eine gasdichte Verbindung des Innenbeutels mit dem Ventilhalter 10 erzielt.

Auch wenn dies in der Zeichnung nicht dargestellt ist, so ist dem Fachmann bekannt, daß der Ventilhalter 10 im Deckel einer Aerosoldose festgelegt ist, so daß sich das Steigrohr und der dieses umgebende Innenbeutel innerhalb der Dose befinden, während der Wulstrand 18 nach oben vorspringt.

### Bezugszeichenliste

- 10: Ventilhalter
- 12: inneres Rohr
- 14: äußeres Rohr
- 16: Stege
- 18: Wulstrand
- 20, 22: Siegelbacken
- 24: erhabene Flächen
- 26: Ausnehmung
- 28: axiale Vorsprünge

## Patentansprüche

1. Verfahren zum gasdichten Verbinden des aus einer Kunststoffolie oder einem Folienlaminat bestehenden Innenbeutels einer Aerosoldose mit einem zylindrischen äußeren Rohr (14) eines aus Kunststoff bestehenden Ventilhalters (10) unter Verwendung von zwei spiegelbildlich ausgebildeten, beheizbaren Siegelbacken (20, 22), die jeweils eine erhabene Fläche aufweisen, die durch eine näherungsweise halbzylindrische Ausnehmung (26) unterbrochen ist, die zur Aufnahme des äußeren Rohres (14) des Ventilhalters (10) dient, wobei die beiden Siegelbacken (20, 22) im geschlossenen Zustand das äußere Rohr des Ventilhalters und die daran anliegenden beiden Lagen des Innenbeutels zwischen sich einklemmen, dadurch **gekennzeichnet,** daß der Innendurchmesser des von den beiden Ausnehmungen (26) der geschlossenen Siegelbacken (20, 22) gebildeten Hohlraums kleiner ist als der Außendurchmesser des äußeren Rohres (14) des Ventilhalters (10), und daß die Ausnehmungen (26) am Übergang in die ebene Fläche (24) der jeweiligen Siegelbacke (20, 22) abgeschrägt sind.

2. Verfahren nach Anspruch 1, dadurch **gekennzeichnet,** daß die Ausnehmungen (26) der beiden Siegelbacken (20, 22) mit Ringnuten versehen sind.

3. Verfahren nach Anspruch 2, dadurch **gekennzeichnet,** daß die Ringnuten einen halbkreisförmigen Querschnitt haben.

4. Verfahren nach einem der vorhergehenden Ansprüche, dadurch **gekennzeichnet,** daß der von den Ausnehmungen (26) der beiden Siegelbacken (20, 22) gebildete Hohlraum im oberen Bereich zylindrisch ist, und nach unten hin elliptisch abgeflacht ist, wobei die längere Achse der Ellipse in der von den ebenen Flächen (24) gebildeten Trennebene liegt.

## Claims

1. Method for forming a gas tight connection between the internal bag of an aerosol can, the internal bag being made of a plastics film or of a film laminate, and the cylindrical outer pipe (14) of a valve holder (10) made of plastics, by the use of two heatable sealing jaws (20, 22) formed as a mirror image of each other and each having a raised surface interrupted by an approximately semi cylindrical recess (26) which serves for accommodating the outer pipe (14) of the valve holder (10), the two sealing jaws (20, 22) in the closed state clamping between them the outer pipe of the valve holder and the two layers of the internal bag that adjoin it, characterised in that the inner diameter of the cavity formed by the two recesses (26) of the closed sealing jaws (20, 22) is smaller than the outer diameter of the outer pipe (14) of the valve holder (10), and that the recesses (26) at their transition to the flat surface (24) of the respective sealing jaw (20, 22) are bevelled.

2. Method according to claim 1, characterised in that the recesses (26) of the two sealing jaws (20, 22) are provided with annular grooves.

3. Method according to claim 2, characterised in that the annular grooves are semi circular in cross section.

4. Method according to one of the preceding claims, characterised in that the cavity formed by the recesses (26) of the two sealing jaws (20, 22), is cylindrical in its upper region and flattens downwards elliptically, the major axis of the ellipse being in the parting plane formed by the flat surfaces (24).

## Revendications

1. Procédé pour assurer une liaison étanche aux gaz entre la cuve intérieure d'une bombe aérosol, constituée par une feuille de plastique ou une feuille laminée, et un tube extérieur cylindrique (14) d'un support de valve (10) en plastique, en utilisant deux joues de serrage (20, 22) de forme symétrique, pouvant être chauffées, présentant une surface en relief interrompue par une cavité (26) de forme approximativement semi-cylindrique, servant à recevoir le tube extérieur (14) du support de valve (10), les deux joues de serrage (20, 22) enserrant entre elles, en position fermée, le tube extérieur du support de valve ainsi que les deux faces adjacentes de la cuve,
caractérisé en ce que
le diamètre interne de l'espace creux formé par les deux cavités (26) des joues de serrage (20, 22) est inférieur au diamètre extérieur du tube extérieur (14) du support de valve (10), et les cavités (26) sont chanfreinées au niveau de leur transition avec la surface plane (24) de la joue de serrage correspondante (20, 22).

2. Procédé selon la revendication 1,
caractérisé en ce que
les cavités (26) des deux joues de serrage (20, 22) sont munies de rainures annulaires.

3. Procédé selon la revendication 2,
caractérisé en ce que
les rainures annulaires ont une section semi-circulaire.

4. Procédé selon l'une quelconque des revendications précédentes,
caractérisé en ce que
l'espace creux formé par les cavités (26) des deux joues (20, 22) est cylindrique à sa partie supérieure et aplati en forme elliptique vers le bas, le grand axe de l'ellipse étant situé dans le plan de séparation entre les surfaces planes (24).
